# EUROPÄISCHE PATENTSCHRIFT

(11) **EP 2 191 326 B1**
(45) Veröffentlichungstag und Bekanntmachung des Hinweises auf die Patenterteilung: **26.10.2011**
(21) Anmeldenummer: 08801798.3
(22) Anmeldetag: 02.09.2008
(51) Int. Cl.: G03B 11/04, G03B 9/10, G03B 9/66, G01J 5/52, G01J 5/62, H04N 5/33, H04N 5/225, H04N 5/232

(54) **Wärmebildkamera mit Verschlussblende**
Thermal imaging camera comprising a cover plate
Caméra thermique comprenant un volet d'obturation

(30) Priorität: 06.09.2007 DE 102007042310
(43) Veröffentlichungstag der Anmeldung: 02.06.2010
(73) Patentinhaber: Testo AG, 79853 Lenzkirch (DE)
(72) Erfinder: ZAHN, Patrick, 79256 Buchenbach (DE); KAISER, Jörg, 79312 Emmendingen (DE); STRATMANN, Martin, 79117 Freiburg (DE); SCHULER, Karl, 79822 Titisee-Neustadt (DE)
(74) Vertreter: Maucher, Wolfgang
(86) Internationale Anmeldenummer: PCT/EP2008/007165
(87) Internationale Veröffentlichungsnummer: WO 2009/033594

(56) Entgegenhaltungen:
- KR-A- 20030 067 213
- KR-A- 20030 092 893
- US-A- 5 994 701
- US-A1- 2005 189 825
- US-B1- 7 122 788

## Beschreibung

Die Erfindung bezieht sich auf eine Wärmebildkamera nach dem Oberbegriff von Anspruch 1.

Im Bereich der Wärmebildkameras werden häufig Thermografiesensoren, die auf dem Bolometer-Prinzip basieren, verwendet. Bolometer mit Anordnungen aus vielen tausend kleinen Einzelthermosäulen als Einzelsensoren (Pixel) können genaue und fein aufgelöste Wärmebilder erzeugen.

Die Verschlussblende ist außer während der Thermografie-sensor-Kalibrierung in der Regel offen. Dadurch besteht die Gefahr, dass der Thermografie-Sensor verschmutzt und dauerhaft beeinträchtigt werden kann, insbesondere bei einem Objektivwechsel. Weiterhin besteht die Gefahr einer Überlastung des Sensors, falls versehentlich mit dem offenen Sensor in die Sonne gezielt wird, was bis zu dessen Zerstörung führen kann. Darüber hinaus benötigt die periodische Betätigung der Verschlussblende für die Dauer der Thermografiesensor-Kalibrierung Strom.

Andererseits kann die Verschlussblende geschlossen gehalten und nur während einer Messung geöffnet werden. Somit ist der Sensor zwar geschützt, jedoch muss die Verschlussblende während der Messung offen gehalten werden, was entweder manuell oder elektrisch erfolgen kann. In letzterem Falle wird auch während der Messung Strom verbraucht, was insbesondere bei batteriebetriebenen, mobilen Handgeräten die Betriebszeit verkürzt.

Aus der US 2005/0189825 A1 ist eine Vorrichtung nach dem Oberbegriff von Anspruch 1 bekannt. Bei dieser Vorrichtung wird ein Anker mit einem Permanentmagneten in den Endpositionen gehalten.

Aus der KR 2003-0067213 A ist eine Verschlussvorrichtung zur Abschirmung des Eingangssignals eines Wärmebild-Aufnahmesystems bekannt, bei welchem ein um einen Drehpunkt schwenkbar gelagertes Verschlussteil über einen Exzentermechanismus von einem elektrischen Rotationsantrieb betätigt wird. Durch die Ausgestaltung der Exzenterkonstruktion kann erreicht werden, dass ein Verschwenken eines Verschlussteils ohne eine Betätigung des Antriebs erschwert ist, bei einer Stromlosschaltung des elektrischen Antriebs wird jedoch der Antrieb frei drehen.

Aus der KR 2003-0092893 A ist eine weitere Wärmebildkamera bekannt, bei welcher ein Antrieb durch eine Spule nur in einer von zwei Endlagen stromlos geschaltet ist, nicht aber in der anderen.

Aus der US 5 994 701 A ist ein Infrarotsensorgerät mit einer Temperaturkorrektionsfunktion bekannt, bei welcher eine Verschlussblende zu Kalibrierungszwecken eingesetzt wird.

Aus der US 7 122 788 B1 ist eine Wärmebildkamera mit adaptiv reduzierendem Offset bekannt, bei welcher eine Verschlussblende vorhanden ist.

Es ist daher Aufgabe der Erfindung eine elektrisch betätigte Verschlussblende zu schaffen, die stromsparend betrieben werden kann und damit zur Thermografiesensor-Kalibrierung und mechanischen Abdeckung des Sensors energieeffizient eingesetzt werden kann.

Diese Aufgabe wird durch eine Wärmebildkamera mit den Merkmalen des Anspruchs 1 gelöst. Insbesondere ist vorgesehen, dass die Offenstellung und die Schließstellung der Verschlussblende jeweils selbsthaltende Endlagen bilden und dass zum Wechseln zwischen den beiden Endlagen ein elektrischer Antrieb vorgesehen ist, der in den selbsthaltenden Endlagen stromlos geschaltet ist.

Zweckmäßigerweise ist in der ersten Endlage der Sensor vollständig abgedeckt und daher geschützt. In der zweiten Endlage ist der Sensor vollständig offen, also in Messstellung.

Der Vorteil gegenüber den bekannten Lösungen ist, dass beide Endlagen selbsthaltend sind und daher die Verschlussblende ohne dauerhaften Energieeinsatz in beiden Endlagen verbleiben kann. Nur zum Umschalten zwischen den Endlagen ist ein Stromimpuls notwendig, der insgesamt jedoch nur einen minimalen Energieaufwand erfordert. Dadurch kann bei batteriebetriebenen Handgeräten die Betriebszeit wesentlich verlängert werden was insbesondere beim Feld-Einsatz mit mobilen Wärmebildkameras entscheidend sein kann.

Insbesondere vorteilhaft ist es, wenn die Verschlussblende ein bistabiles Kippelement aufweist, das durch einen elektrischen Antrieb umschaltbar ist. Dazu ist die Verschlussblende mit einem Schwenkarm verbunden, an dessen anderem Ende eine Schwenklagerung vorgesehen ist und an dem ein Schwenkantrieb angreift. Versetzt zu der Drehachse ist eine Angriffsstelle für eine Feder vorgesehen, die als Kippelement die beiden Endstellungen fixiert.

Weiterhin vorteilhaft ist es, wenn die Verschlussblende einen Temperatursensor, insbesondere ein Thermoelement, aufweist. Damit kann die Verschlusstemperatur exakt bestimmt werden und die Kalibrierung des Thermografiesensors ist genauer gegenüber einer reinen Gehäuse-Temperaturmessung.

Weitere vorteilhafte Ausgestaltungen ergeben sich aus den Unteransprüchen sowie durch Kombinationen der einzelnen Merkmale.

Ein Ausführungsbeispiel der Erfindung ist nachfolgend anhand der Zeichnungen erläutert.

Es zeigen:
- Fig. 1: eine Aufsicht auf eine Verschlussblende in einer Endlage,
- Fig. 2: eine perspektivische Schrägansicht der Verschlussblende der Fig. 1
- Fig. 3: eine Aufsicht auf eine Verschlussblende in einer zweiten Endlage,
- Fig. 4: eine perspektivische Schrägansicht der Verschlussblende der Fig. 3

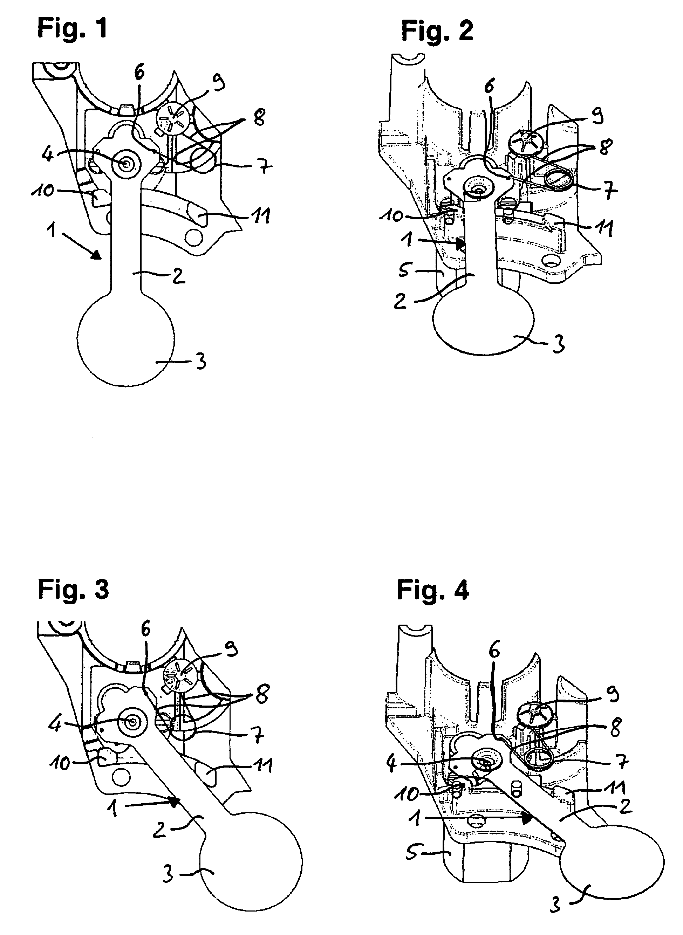

In Fig. 1 und 2 ist eine Verschlussblende 1 einer Wärmebildkamera in der geschlossenen Endlage abgebildet, in der ein zur Wärmebildkamera gehörender Thermografie-Sensor abgedeckt ist. Die Verschlussblende 1 weist einen Schwenkarm 2 auf, der an einem Ende die Blendenscheibe 3 und an seinem anderen Ende eine Aufhängung 4 als Schwenklagerung aufweist, an der der Schwenkarm 2 mit einem Elektromotor 5 verbunden ist. Seitlich und von der Drehachse des Schwenkarmes 2 versetzt befindet sich eine Aufhängestelle 6 für eine Feder 7, die als Schenkelfeder 7 ausgebildet ist und zwei Schenkel 8 aufweist, von denen einer an der Schwenkarm-Aufhängestelle 6 befestigt ist und der andere an einer fixen Aufhängestelle 9 am Gehäuse. Die Schenkel 8 sind jeweils beweglich in den Aufhängestellen 6, 9 gelagert. Die Feder 7 ist daher in beiden Endlagen entspannt und hält die Verschlussblende an einem Anschlag 10 (Fig. 1 und 2) oder einem Anschlag 11 (Fig. 3 und 4).

Durch Rotation des Motors 5 wird der Schwenkarm 2 verschwenkt und dabei die Feder 7 zunächst gespannt, indem die Schenkel 6, 9 zusammengedrückt werden. Sobald der Totpunkt überschritten ist, entspannt sich die Feder 7. Die Verschlussblende wird dadurch in der zweiten Endlage gehalten und der Schwenkarm 2 liegt an dem zweiten Anschlag 11 an, wie in Fig. 3 und 4 erkennbar. Um die Verschlussblende wieder zurückzukippen, wird der Motor 5 umgepolt und die Schenkelfeder 7 wieder zusammengedrückt, bis der Totpunkt überwunden ist und die Verschlussblende wieder in die erste Endlage zurückkippt. Nur während der kurzen Umschaltphasen ist der Motor 5 bestromt, während er in den Endlagen der Blendenscheibe 3 stromlos geschaltet ist.

Da der Motor 5 in den Endlagen auch keine Anforderungen bezüglich der Haltekraft erfüllen muss, kann hier ein kostengünstiger Elektromotor verwendet werden. Da zudem keine volle Umdrehung benötigt wird um die Verschlussblende umzukippen, kann auch jeder andere Antrieb vorgesehen werden, der in der Lage ist, den Totpunkt des Schwenkarms zu überwinden, wie beispielsweise ein Hubmagnet, ein Voice-Coil Antrieb oder ähnliches. Dadurch ist der Antrieb kostengünstig herstellbar und die Verschlussblende notfalls auch manuell bedienbar.

## Patentansprüche

1. Wärmebildkamera mit einem Thermografie-Sensor und einer zwischen einer Offen- und einer Schließstellung mittels eines elektrischen Antriebs (5) verstellbaren Verschlussblende, wobei die Offenstellung und die Schließstellung der Verschlussblende (1) jeweils selbsthaltende Endlagen bilden und wobei zum Wechseln zwischen den beiden Endlagen ein elektrischer Antrieb (5) vorgesehen ist, der in den selbsthaltenden Endlagen stromlos geschaltet ist, wobei die Verschlussblende (1) mit einem Ende eines Schwenkarms (2) verbunden ist, an dessen anderem Ende eine Schwenklagerung (4) vorgesehen ist und an dem der elektrische Antrieb (5) angreift, **dadurch gekennzeichnet, dass** versetzt zu der Drehachse der Schwenklagerung (4) eine Angriffstelle (6) für eine Feder (7) vorgesehen ist, wobei die Feder (7) als Kippelement die beiden Endlagen fixiert.

2. Wärmebildkamera nach Anspruch 1, **dadurch gekennzeichnet, dass** die Feder (7) ein bistabiles Kippelement ist, das durch den elektrischen Antrieb umschaltbar ist.

3. Wärmebildkamera nach Anspruch 1 oder 2, **dadurch gekennzeichnet, dass** die Feder (7) als Schenkelfeder ausgebildet ist und zwei Schenkel aufweist, von denen einer an der Schwenkarm-Aufhängestelle (6) befestigt ist und der andere an einer fixen Aufhängestelle (9) am Gehäuse.

4. Wärmebildkamera nach einem der Ansprüche 1 bis 3, **dadurch gekennzeichnet, dass** die Feder (7) in beiden Endlagen entspannt ist.

5. Wärmebildkamera nach einem der Ansprüche 1 bis 4, **dadurch gekennzeichnet, dass** der elektrische Antrieb (5) eine Spule und einen Permanentmagneten aufweist.

6. Wärmebildkamera nach einem der Ansprüche 1 bis 5, **dadurch gekennzeichnet, dass** der elektrische Antrieb einen Elektromotor (5), beispielsweise einen Schrittmotor, Getriebemotor oder dergleichen, aufweist.

7. Wärmebildkamera nach einem der Ansprüche 1 bis 6, **dadurch gekennzeichnet, dass** das bistabile Kippelement eine Schenkelfeder (7) aufweist.

8. Wärmebildkamera nach einem der Ansprüche 1 bis 7, **dadurch gekennzeichnet, dass** die Verschlussblende einen Temperatursensor, insbesondere ein Thermoelement aufweist.

## Claims

1. Thermal imaging camera having a thermal imaging sensor and a closure shutter that is movable between an open and a closed position by means of an electric drive (5), the open position and the closed position of the closure shutter (1) each constituting self-maintaining end positions, and for switching between the two end positions an electrical drive (5) is provided which is disconnected from the power supply in the self-maintaining end positions, the closure shutter (1) being connected to one end of a pivot arm (2) on the other end of which is provided a swivel mounting (4) and on which the electric drive (5) acts, **characterised in that** a point of engagement (6) for a spring (7) is provided, offset from the rotation axis of the swivel mounting (4), the spring (7) being a rocker element determining the two end positions.

2. Thermal imaging camera according to claim 1, **characterised in that** the spring (7) is a bistable rocker element that can be switched over by the electric drive.

3. Thermal imaging camera according to claim 1 or 2, **characterised in that** the spring (7) is constructed as a leg spring and has two legs, one of which is attached to the swivel arm suspension point (6), while the other is attached to a fixed suspension point (9) on the housing.

4. Thermal imaging camera according to one of claims 1 to 3, **characterised in that** the spring (7) is relaxed in both end positions.

5. Thermal imaging camera according to one of claims 1 to 4, **characterised in that** the electric drive (5) has a coil and a permanent magnet.

6. Thermal imaging camera according to one of claims 1 to 5, **characterised in that** the electric drive comprises an electric motor (5), for example a stepping motor, geared motor or the like.

7. Thermal imaging camera according to one of claims 1 to 6, **characterised in that** the bistable rocker element comprises a leg spring (7).

8. Thermal imaging camera according to one of claims 1 to 7, **characterised in that** the closure shutter comprises a temperature sensor, particularly a thermocouple.

## Revendications

1. Caméra thermique comportant un capteur thermographique et un obturateur réglable entre une position ouverte et une position fermée au moyen d'un entraînement électrique (5), la position ouverte et la position fermée de l'obturateur (1) formant chaque fois des positions extrêmes automaintenues et un entraînement électrique (5) étant prévu pour le passage d'une position extrême à l'autre, lequel n'est pas alimenté en courant dans les positions extrêmes automaintenues, l'obturateur (1) étant relié à une extrémité d'un bras pivotant (2) à l'autre extrémité duquel est prévu un palier de pivotement (4) et sur laquelle l'entraînement électrique (5) agit, **caractérisée en ce qu'**un point d'attaque (6) pour un ressort (7) est prévu en décalage par rapport à l'axe de rotation du palier de pivotement (4), le ressort (7) fixant les deux positions extrêmes sous la forme d'un élément basculant.

2. Caméra thermique selon la revendication 1, **caractérisée en ce que** le ressort (7) est un élément basculant bistable qui peut être commuté par l'entraînement électrique.

3. Caméra thermique selon la revendication 1 ou 2, **caractérisée en ce que** le ressort (7) est réalisé sous la forme d'un ressort à branches et présente deux branches dont l'une est fixée au point d'accrochage de bras pivotant (6) et l'autre à un point d'accrochage (9) fixe sur le boîtier.

4. Caméra thermique selon une des revendications 1 à 3, **caractérisée en ce que** le ressort (7) est détendu dans les deux positions extrêmes.

5. Caméra thermique selon une des revendications 1 à 4, **caractérisée en ce que** l'entraînement électrique (5) présente une bobine et un aimant permanent.

6. Caméra thermique selon une des revendications 1 à 5, **caractérisée en ce que** l'entraînement électrique présente un moteur électrique (5), par exemple un moteur pas à pas, un motoréducteur ou analogue.

7. Caméra thermique selon une des revendications 1 à 6, **caractérisée en ce que** l'élément basculant bistable présente un ressort à branches (7).

8. Caméra thermique selon une des revendications 1 à 7, **caractérisée en ce que** l'obturateur présente un capteur de température, en particulier un thermocouple.
